# EUROPÄISCHE PATENTSCHRIFT

(11) **EP 3 810 468 B1**
(45) Veröffentlichungstag und Bekanntmachung des Hinweises auf die Patenterteilung: **06.04.2022**
(21) Anmeldenummer: 19736995.2
(22) Anmeldetag: 18.06.2019
(51) Int. Cl.: B60T 13/68

(54) **PARKBREMSEINRICHTUNG FÜR EIN KRAFTFAHRZEUG**
PARKING BRAKE ARRANGEMENT FOR VEHICLE
DISPOSITIF DE FREIN DE STATIONNEMENT POUR VÉHICULE

(30) Priorität: 19.06.2018 DE 102018114636
(43) Veröffentlichungstag der Anmeldung: 28.04.2021
(73) Patentinhaber: KNORR-BREMSE Systeme für Nutzfahrzeuge GmbH, 80809 München (DE)
(72) Erfinder: SCHNITTGER, Karsten, 80935 München (DE); GRIESSER, Fabian, 80803 München (DE)
(86) Internationale Anmeldenummer: PCT/EP2019/065937
(87) Internationale Veröffentlichungsnummer: WO 2019/243284

(56) Entgegenhaltungen:
- WO-A1-2016/169972
- CN-A- 106 882 174
- DE-A1-102006 041 010
- DE-A1-102006 055 570
- DE-A1-102008 014 458
- DE-A1-102015 118 290

## Beschreibung

Die vorliegende Erfindung betrifft eine Parkbremseinrichtung für Kraftfahrzeuge, insbesondere eine Parkbremseinrichtung mit wenigstens einer ersten Parkbremseinheit und einer zweiten Parkbremseinheit.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Unter anderem ist bei dem Einsatz von elektronischen Parkbremsen in den USA zu berücksichtigen, dass für ein Zugfahrzeug und einen Anhänger eines Kraftfahrzeuges jeweils separate Einheiten einer elektronischen Parkbremseinrichtung mit voneinander unabhängigen pneumatischen Kreisläufen vorhanden sein müssen.

Aus der WO 2015/154 787 A1 ist bereits eine elektronische Parkbremse bekannt, die ein Relaisventil nutzt, dessen Kolben als Stufenkolben ausgeführt ist und eine Rückkopplung des Relaisventilausgangs zum Steuerraum des Relaisventils aufweist. In den Rückkopplungspfad ist eine Drosseleinheit vorgesehen. Jedoch tritt insbesondere beim Entlüften der Vorrichtung anhand der Rückkopplung mit der Drosseleinheit ein Druckluftverlust auf. Es wird eine Nachregelung notwendig, wobei Magnetventile zur Belüftung und Entlüftung entsprechend geschaltet werden müssen.

Aus der CN 106 882 174 A sind ein Relaisventil und eine darauf basierende elektronische Parkbremse bekannt.

Es ist daher die Aufgabe der vorliegenden Erfindung, eine Parkbremseinrichtung der eingangs genannten Art in vorteilhafter Weise weiter zu bilden, insbesondere dahingehend, dass eine Parkbremseinrichtung vergleichsweise einfach aufgebaut sein kann und auf vergleichsweise kontrollierte Weise belüftet und entlüftet werden kann.

Diese Aufgabe wird erfindungsgemäß gelöst durch eine Parkbremseinrichtung für Kraftfahrzeuge mit den Merkmalen des Anspruchs 1. Danach ist eine Parkbremseinrichtung mit wenigstens einer ersten Parkbremseinheit und einer zweiten Parkbremseinheit vorgesehen, wobei die erste Parkbremseinheit wenigstens einen ersten Druckluftanschluss, eine erste Einlass-Entlüftungs-Magnetventileinheit, ein erstes Relaisventil, ein Federbremsventil und wenigstens einen ersten Druckluftausgang aufweist, wobei der erste Druckluftanschluss mit der ersten Einlass-Entlüftungs-Magnetventileinheit und dem ersten Relaisventil verbunden ist, wobei eine erste Steuerleitung derart in der ersten Parkbremseinheit vorgesehen ist, so dass das erste Relaisventil mit der ersten Einlass-Entlüftungs-Magnetventileinheit verbunden ist, wobei die erste Steuerleitung stromaufwärts des ersten Relaisventils eine erste Abzweigung aufweist, wobei eine erste Ausgangsleitung in der ersten Parkbremseinheit vorgesehen ist, die mit dem wenigstens einen ersten Druckluftausgang verbunden ist und eine erste Ausgangs-Abzweigung aufweist, wobei eine Federbremsleitung in der ersten Parkbremseinheit vorgesehen ist, die über die erste Abzweigung mit der ersten Steuerleitung und über die erste Ausgangs-Abzweigung mit der ersten Ausgangsleitung verbunden ist, wobei die erste Parkbremseinheit ein Federbremsventil aufweist, das in der Federbremsleitung angeordnet und mit dem ersten Relaisventil verbunden ist, und eine erste Drosseleinheit, die in der Federbremsleitung zwischen der ersten Ausgangs-Abzweigung der ersten Ausgangsleitung und der ersten Abzweigung der ersten Steuerleitung angeordnet ist.

Insbesondere kann die erste Parkbremseinheit der Parkbremseinrichtung für ein Zugfahrzeug eines Kraftfahrzeuges vorgesehen sein, wobei die zweite Parkbremseinheit für einen Anhänger bzw. einen Trailer vorgesehen sein kann.

Die Erfindung basiert auf dem Grundgedanken, dass in der Federbremsleitung der ersten Parkbremseinheit sowohl ein Federbremsventil als auch eine erste Drosseleinheit vorgesehen ist.

Das Federbremsventil und die erste Drosseleinheit sind insbesondere über die Federbremsleitung, die erste Abzweigung und die erste Steuerleitung mit dem ersten Relaisventil verbunden.

Des Weiteren ist die Federbremsleitung mit dem Federbremsventil über die erste Steuerleitung mit der ersten Einlass-Entlüftungs-Magnetventileinheit verbunden. Auf diese Weise ist es möglich, eine Entlüftung oder Belüftung wenigstens eines Federspeicherbremszylinders anhand des Federbremsventils und der ersten Drosseleinheit bedarfsgerecht und mit hoher Genauigkeit zu steuern bzw. gegebenenfalls zu sperren.

Es ist im Sinne der vorliegenden Erfindung bevorzugter Weise vorgesehen, dass das Relaisventils als ein bistabiles Element ausgebildet ist.

Das erste Relaisventil weist vorzugsweise einen Eingang, einen Ausgang bzw. Arbeitsausgang, einen Steuereingang und einen Entlüftungsausgang auf. Die erste Steuerleitung ist über den Steuereingang mit dem ersten Relaisventil verbunden. Die Druckluftquelle ist mit dem Eingang des ersten Relaisventils verbunden. Der Ausgang bzw. Arbeitsausgang des ersten Relaisventils ist über die erste Ausgangsleitung bevorzugter Weise mit wenigstens einem Federspeicherbremszylinder verbunden oder verbindbar.

Indem an dem Steuereingang ein spezifischer Druck angelegt wird, ist eine Verbindung zwischen dem Eingang und dem Ausgang bzw. Arbeitsausgang des ersten Relaisventils herstellbar und steuerbar.

Dieser spezifische Druck muss einem Schwelldruck gleich oder größer sein, um eine Verbindung zwischen Eingang und Ausgang des ersten Relaisventils bereitstellen zu können. Bei Erreichen des Schwelldrucks wird der Entlüftungsausgang des ersten Relaisventils geschlossen.

Anhand von Fluiddrücken, die wenigstens gleich oder größer als der vorbestimmbare Schwelldruck sind, ist eine Verbindung zwischen dem Eingang und dem Ausgang des ersten Relaisventils bedarfsweise steuerbar. Auf diese Weise ist vorteilhaft ein spezifischer Druck am Ausgang bzw. Arbeitsausgang des ersten Relaisventils erzielbar.

Des Weiteren ist es möglich, dass die Federbremsleitung in Verbindung mit der ersten Abzweigung und der ersten Ausgangs-Abzweigung über die erste Drosseleinheit und das Federbremsventil eine Rückkopplungsverbindung zwischen einem Steuereingang und einem Ausgang des ersten Relaisventils ausbildet. Insbesondere kann eine Rückkopplungsverbindung vorliegen, wenn das Federbremsventil stromlos offen geschaltet ist.

So kann ein Druck von dem Ausgang bzw. Arbeitsausgang des ersten Relaisventils bedarfsweise zur Steuerung des ersten Relaisventils einsetzbar sein.

Insbesondere kann eine Verbindung zwischen dem Eingang und dem Ausgang des Relaisventils erhalten werden, indem der Druck an dem Ausgang des Relaisventils zu dem Steuereingang des Relaisventils zurückkoppelbar ist.

Ein Luftverlust bei der Be- und Entlüftung ist an dem Ausgang des ersten Relaisventils anhand der mittels des Federbremsventils trennbaren Federbremsleitung vermeidbar. Ein Umschalten zwischen den Betriebszuständen erfolgt schneller und präziser.

Die Federbremsleitung ist vorzugsweise über die erste Steuerleitung mit dem Steuereingang des ersten Relaisventils verbunden. Des Weiteren ist die Federbremsleitung über die erste Ausgangsleitung mit dem Ausgang bzw. Arbeitsausgang des ersten Relaisventils verbunden.

Insbesondere kann die erste Drosseleinheit entlang der Federbremsleitung zwischen der ersten Abzweigung und dem Federbremsventil angeordnet sein.

Alternativ kann die erste Drosseleinheit entlang der Federbremsleitung zwischen dem Federbremsventil und der ersten Ausgangs-Abzweigung angeordnet sein.

In diesem Sinne ist die erste Drosseleinheit, in Abhängigkeit von dem konkreten Zustand bzw. Schaltzustand der ersten Parkbremseinheit, stromaufwärts oder stromabwärts des Federbremsventils entlang der Federbremsleitung vorgesehen.

Alternativ kann die erste Parkbremseinheit auch ohne ein Federbremsventil in der Federbremsleitung vorgesehen sein. In der rückkoppelnden Federbremsleitung ist in diesem Falle nur die erste Drosseleinheit angeordnet.

Insbesondere kann das Federbremsventil optional eingespart werden, sodass auch kostengünstigere Parkbremseinrichtungen bzw. erste Parkbremseinheiten mit geringerer Regel- bzw. Stellgenauigkeit bedarfsweise verfügbar sind.

Mittels der Kombination aus Federbremsventil und erster Drosseleinheit in der Federbremsleitung ist insbesondere ein Luftverlust im Zuge eines Schaltvorgangs zwischen verschiedenen Betriebsmodi eines Kraftfahrzeuges mit der erfindungsgemäßen Parkbremseinrichtung vermeidbar. Ein Schaltvorgang zwischen den Betriebszuständen kann schneller, effizienter und präziser Erfolgen. Insbesondere ist durch das Unterbinden eines Luftverlustes keine Nachregelung von Druckluft notwendig.

Als Betriebsmodi können ein Fahrzustand, ein Parkzustand oder ein abstufbarer Bremszustand der Parkbremseinrichtung für das Kraftfahrzeug vorgesehen sein.

Für den abstufbaren Bremszustand kann ein bedarfsweiser, konstanter Druck an dem Ausgang des ersten Relaisventils einstellbar sein, um eine beliebige Bremswirkung zu erzielen.

Unter einem konstanten Druck kann im Sinne der vorliegenden Erfindung insbesondere auch ein Druckbereich mit einem einzuhaltenden, vorzugsweise vorgebbaren, Maximaldruck und Minimaldruck verstanden werden.

Insbesondere kann der Druck zwischen 0 bar und dem maximalen Systemdruck liegen.

Ein konstanter Druck bzw. Druckbereich kann im Sinne der vorliegenden Erfindung insbesondere zeitweise eingestellt bzw. gehalten werden.

Am Ausgang des ersten Relaisventils ist ein Druck bereitstellbar, der vorzugsweise proportional zu dem Druck am Steuereingang des ersten Relaisventils ist.

Alternativ kann darüber hinaus ein Stretch-Break-Zustand anhand der erfindungsgemäßen Parkbremseinrichtung vorgesehen sein. So kann durch ein vorzugsweise abstufbares Einbremsen des Anhängers das Kraftfahrzeug, mit z.B. einem Zugfahrzeug und einem Anhänger, gestreckt werden und ist auf diese Weise stabilisierbar.

Vorzugsweise ist in diesem Sinne eine Parkbremse und eine Betriebsbremse des Zugfahrzeugs im Stretch-Brake-Zustand gelöst, wobei eine Parkbremse, bevorzugter Weise wenigstens ein Federspeicherbremszylinder, des Anhängers aktiviert ist, insbesondere abstufbar aktivierbar ist.

In diesem Sinne ist unter einem Kraftfahrzeug, insbesondere einem Nutzfahrzeug, vorzugsweise ein Zugfahrzeug mit wenigstens einem Anhänger zu verstehen.

Die Umschaltung zwischen z.B. einem Fahrzustand, einem Parkzustand oder einem abstufbaren Bremszustand ist insbesondere anhand der erfindungsgemäßen Parkbremsvorrichtung schneller und kontrollierter durchführbar.

Des Weiteren ist es möglich, dass das Federbremsventil als ein stromlos offenes Magnetventil vorgesehen ist. Somit ist vorteilhafter Weise eine Rückkopplung zwischen dem Ausgang des ersten Relaisventils und dem Steuereingang gegeben.

Im stromlosen Zustand ist eine vorteilhafte Rückkopplung zwischen Ausgang und Steuereingang des ersten Relaisventils gegeben, die im Bedarfsfall durch Umschalten des Federbremsventils trennbar ist. So kann ein Druck von dem Ausgang bzw. Arbeitsausgang des ersten Relaisventils bedarfsweise zur Steuerung des ersten Relaisventils einsetzbar sein.

Des Weiteren kann das Federbremsventil während eines Betriebszustandes vorteilhaft in der stromlos offenen Schaltstellung verbleiben und muss lediglich zum Wechseln des Betriebszustands geschaltet werden.

Ein Luftverlust bei der Be- und Entlüftung ist anhand des Federbremsventils entlang der Federbremsleitung vermeidbar. Ein Umschalten zwischen den Betriebszuständen erfolgt schneller, effizienter und präziser.

Im Sinne der vorliegenden Erfindung sind Ventile bevorzugter Weise als Magnetventile mit einer Rückstellfeder vorgesehen. Anhand elektromagnetisch schaltbarer, federbelasteter Ventile kann ein stromloser Schaltzustand stets sichergestellt werden, insbesondere sobald ein in gezielter Form, z.B. durch elektromagnetisches Schalten, herbeigeführter Schaltzustand beendet wird.

Des Weiteren ist es möglich, einen konstanten Druck an dem Ausgang des ersten Relaisventils bzw. der ersten Parkbremseinheit durch Schalten des Federbremsventils zu steuern bzw. zu regeln.

Darüber hinaus kann die erste Einlass-Entlüftungs-Magnetventileinheit derart ausgestaltet sein, dass zwischen dem ersten Druckluftanschluss und der ersten Steuerleitung wenigstens ein erstes Einlass-Magnetventil und zwischen der ersten Steuerleitung und einem ersten Entlüftungsausgang ein erstes Entlüftungs-Magnetventil vorgesehen ist.

In diesem Sinne kann das Entlüftungs-Magnetventil den Enlüftungsausgang aufweisen.

Die erste Steuerleitung mündet stromaufwärts des ersten Relaisventils in das vorzugsweise eigenständige erste Einlassventil sowie das eigenständige erste Entlüftungsventil innerhalb der ersten Einlass-Entlüftungs-Magnetventileinheit.

Alternativ kann vorgesehen sein, dass die erste Einlass-Entlüftungs-Magnetventileinheit ein kombiniertes Magnetventil als kombiniertes erstes Einlass-Entlüftungs-Ventil mit dem ersten Entlüftungsausgang aufweist. In diesem Fall ist in der ersten Einlass-Entlüftungs-Magnetventileinheit, zwischen dem kombinierten ersten Einlass-Entlüftungs-Ventil und der ersten Abzweigung der ersten Steuerleitung, vorzugsweise ein erstes Halteventil vorgesehen.

So kann eine gezielte Steuerbarkeit der Volumina innerhalb der ersten Parkbremseinheit der Parkbremseinrichtung, insbesondere zur Belüftung und Entlüftung des Steuereingangs des ersten Relaisventils, erzielt werden.

Es kann des Weiteren vorgesehen, dass die zweite Parkbremseinheit wenigstens einen zweiten Druckluftanschluss aufweist, eine zweite Einlass-Entlüftungs-Magnetventileinheit, ein zweites Relaisventil und wenigstens einen weiteren Druckluftausgang, wobei der zweite Druckluftanschluss mit dem zweiten Relaisventil verbunden ist, wobei eine zweite Steuerleitung derart in der zweiten Parkbremseinheit vorgesehen ist, so dass das zweite Relaisventil mit der zweiten Einlass-Entlüftungs-Magnetventileinheit verbunden ist, wobei die zweite Steuerleitung stromaufwärts des zweiten Relaisventils eine zweite Abzweigung aufweist, wobei eine zweite Ausgangsleitung in der zweiten Parkbremseinheit vorgesehen ist, die mit dem wenigstens einen weiteren Druckluftausgang verbunden ist und eine zweite Ausgangs-Abzweigung aufweist, wobei eine Rückkopplungsleitung in der zweiten Parkbremseinheit vorgesehen ist, die über die zweite Abzweigung mit der zweiten Steuerleitung und über die zweite Ausgangs-Abzweigung mit der zweiten Ausgangsleitung verbunden ist, wobei die zweite Parkbremseinheit eine zweite Drosseleinheit aufweist, die in der Rückkopplungsleitung zwischen der zweiten Ausgangs-Abzweigung (81b) der zweiten Ausgangsleitung und der zweiten Abzweigung der zweiten Steuerleitung angeordnet ist.

Des Weiteren weist die erste Parkbremseinheit im Vergleich ein Federbremsventil in der Rückkopplungsverbindung zwischen der ersten Ausgangs-Abzweigung und der ersten Abzweigung der ersten Steuerleitung auf.

Hingegen ist die zweite Parkbremseinheit insbesondere ohne ein Federbremsventil in der Rückkopplungsleitung vorgesehen.

Darüber hinaus sind die zweite Einlass-Entlüftungs-Magnetventileinheit und das zweite Relaisventil vorzugsweise vergleichbar bzw. identisch zu der ersten Einlass-Entlüftungs-Magnetventileinheit und dem ersten Relaisventil ausgestaltet.

Bevorzugter Weise ist die erste Parkbremseinheit zur Bereitstellung eines Betriebsbremsenausgangs und eines ersten Federspeicherbremszylinderausgangs, als ersten und zweiten Druckluftausgang, für ein Zugfahrzeug vorgesehen. So kann die Betriebsbremse und die Parkbremse eines Zugfahrzeugs zweckmäßig belüftet bzw. entlüftet werden.

In diesem Sinne kann die erste Parkbremseinheit des Weiteren ein insbesondere druckgesteuertes Wechsel-Rückschlagventil aufweisen, dass mit dem Betriebsbremsenausgang und dem Federspeicherbremszylinderausgang sowie dem Ausgang des ersten Relaisventils verbunden ist.

Vorzugsweise ist das Wechsel-Rückschlagventil als ein sogenanntes Select-High-Ventil vorgesehen.

Die zweite Parkbremseinheit ist vorzugsweise zur Steuerung wenigstens eines Federspeicherbremszylinders des Anhängers vorgesehen. So ist eine Parkbremse des Anhängers mittels der zweiten Parkbremseinheit steuerbar.

In diesem Sinne kann die zweite Parkbremseinheit einen zweiten Federspeicherbremszylinderausgang als einen weiteren Druckluftausgang aufweisen, der über die zweite Ausgangsleitung mit dem Ausgang bzw. Arbeitsausgang des zweiten Relaisventils verbunden ist.

Die erste Parkbremseinheit und die zweite Parkbremseinheit stellen in Kombination miteinander somit eine Parkbremseinrichtung zur bedarfsweisen Ansteuerung der Bremssysteme eines Kraftfahrzeuges, Insbesondere eines Zugfahrzeuges und eines Anhängers bereit.

Insbesondere ist vorgesehen, dass die erste Parkbremseinheit und die zweite Parkbremseinheit unabhängig voneinander steuerbar sind. So können das Zugfahrzeug und der Anhänger eigenständig und unabhängig voneinander angesteuert werden und eine bedarfsweise Bremswirkung aufbringen.

Des Weiteren ist vorgesehen, dass die zweite Einlass-Entlüftungs-Magnetventileinheit mit dem zweiten Druckluftanschluss verbunden ist.

Insbesondere kann im Sinne der vorliegenden Erfindung vorgesehen sein, dass der erste und zweite Druckluftanschluss mit einer gemeinsamen Druckluftquelle verbunden sind.

Alternativ kann im Sinne der vorliegenden Erfindung vorgesehen sein, dass der erste und zweite Druckluftanschluss als ein gemeinsamer Druckluftanschluss ausgebildet sind.

Es ist möglich, dass die Rückkopplungsleitung in Verbindung mit der zweiten Abzweigung und der zweiten Ausgangs-Abzweigung über die zweite Drosseleinheit eine Rückkopplungsverbindung zwischen einem Steuereingang und einem Ausgang des zweiten Relaisventils ausbildet.

Anhand der Rückkopplungsleitung liegt eine kontinuierliche Verbindung zwischen dem Ausgang bzw. Arbeitsausgang des zweiten Relaisventils und dem Steuereingang des zweiten Relaisventils vor.

Sobald der Steuereingang des zweiten Relaisventils mit einem hinreichenden Luftdruck belüftet ist, kann über eine Verbindung zwischen dem Eingang und dem Ausgang des Relaisventils eine Druckluft an dem Ausgang des zweiten Relaisventils bereitgestellt werden.

Der hinreichende Luftdruck orientiert sich hierbei an einem vorzugsweise vorgebbaren Schwelldruck des zweiten Relaisventils.

Die Zuführung zusätzlicher Druckluft zu dem Steuereingang des zweiten Relaisventils über die Einlass-Entlüftungs-Magnetventileinheit ist anschließend nicht mehr zwingend notwendig, um den Betrieb des zweiten Relaisventils aufrechtzuerhalten. Es kann ein hoher bzw. spezifischer Druck an dem Ausgang des zweiten Relaisventils bereit zu stellen.

Die Funktionalität des zweiten Relaisventils entspricht somit der Funktionalität des ersten Relaisventils.

Des Weiteren kann die zweite Einlass-Entlüftungs-Magnetventileinheit mit wenigstens einem zweiten Einlassventil, einem zweiten Entlüftungsventil und einem zweiten Entlüftungsausgang derart ausgestaltet sein, dass das zweite Einlassventil in Verbindung mit der zweiten Steuerleitung vorgesehen ist und zwischen der zweiten Steuerleitung und einem zweiten Entlüftungsausgang ein zweites Entlüftungsventil vorgesehen ist.

Ebenso wie mit Bezug auf das erste Einlass-Entlüftungs-Magnetventileinheit erläutert, mündet die zweite Steuerleitung stromaufwärts des zweiten Relaisventils in das vorzugsweise eigenständige zweite Einlassventil sowie das eigenständige zweite Entlüftungsventil innerhalb der zweiten Einlass-Entlüftungs-Magnetventileinheit.

Alternativ kann vorgesehen sein, dass die zweite Einlass-Entlüftungs-Magnetventileinheit ein kombiniertes Magnetventil als kombiniertes zweites Einlass-Entlüftungsventil mit dem zweiten Entlüftungsausgang aufweist. In diesem Fall ist in der zweiten Einlass-Entlüftungs-Magnetventileinheit, zwischen dem kombinierten zweiten Einlass-Entlüftungs-Ventil und der zweiten Abzweigung der zweiten Steuerleitung, vorzugsweise ein zweites Halteventil vorgesehen.

So kann eine gezielte Steuerbarkeit der Volumina innerhalb der zweiten Parkbremseinheit, insbesondere zur Belüftung und Entlüftung des Steuereingangs des zweiten Relaisventils, erzielt werden.

Die Funktionalität der zweiten Einlass-Entlüftungs-Magnetventileinheit entspricht somit der Funktionalität der ersten Einlass-Entlüftungs-Magnetventileinheit.

Darüber hinaus ist es möglich, dass das erste und zweite Einlassventil als stromlos geschlossene Magnetventile vorgesehen sind. Somit ist eine Belüftung bzw. Entlüftung der ersten und zweiten Parkbremseinheit, insbesondere zur Steuerung des ersten und zweiten Relaisventils, lediglich zur Umschaltung der Betriebszustände notwendig.

Bevorzugter Weise kann ein Betriebszustand, Insbesondere ein Fahrzustand oder ein Parkzustand, ausgeführt werden, wobei das ersten und zweite Einlassventil sowie das erste und zweite Entlüftungsventil der ersten und zweiten Einlass-Entlüftungs-Magnetventileinheit stromlos geschlossen sind.

Während eines Fahrzustands oder eines Parkzustands des Kraftfahrzeuges ist kein Umschalten des ersten oder zweiten Einlassventils bzw. des ersten oder zweiten Entlüftungsventils notwendig.

Weitere Einzelheiten und Vorteile der Erfindung sollen nun anhand eines in den Zeichnungen näher dargestellten Ausführungsbeispiels erläutert werden.

Es zeigen:
- Fig. 1: ein Ausführungsbeispiel einer Parkbremseinrichtung mit einer ersten und einer zweiten Parkbremseinheit in einem Parkzustand;
- Fig. 2: das Ausführungsbeispiel einer Parkbremseinrichtung mit einer ersten und einer zweiten Parkbremseinheit in einem Schaltzustand zwischen einem Parkzustand und einem Fahrzustand;
- Fig. 3: das Ausführungsbeispiel einer Parkbremseinrichtung mit einer ersten und einer zweiten Parkbremseinheit in einem Fahrzustand;
- Fig. 4: das Ausführungsbeispiel einer Parkbremseinrichtung mit einer ersten und einer zweiten Parkbremseinheit in einem Schaltzustand zwischen einem Fahrzustand und einem Parkzustand;
- Fig. 5: das Ausführungsbeispiel einer Parkbremseinrichtung mit einer ersten und einer zweiten Parkbremseinheit in einem abstufbaren Bremszustand.

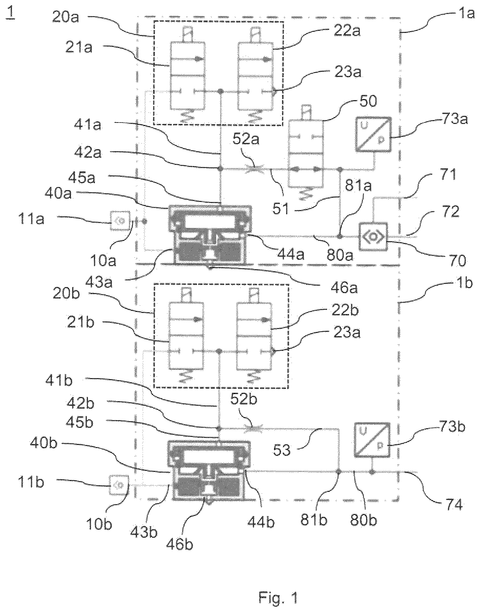

Fig.1 zeigt in schematischer Darstellung eine Parkbremseinrichtung 1 für ein Kraftfahrzeug, hier ein Nutzfahrzeug.

Die Parkbremseinrichtung 1 weist eine erste Parkbremseinheit 1a für ein Zugfahrzeug und eine zweite Parkbremseinheit 1b für einen Anhänger bzw. einen Trailer auf.

Bevorzugter Weise werden die erste Parkbremseinheit 1a und die zweite Parkbremseinheit 1b in Kombination miteinander als Parkbremseinrichtung 1 eingesetzt.

Die erste Parkbremseinheit 1b weist einen ersten Druckluftanschluss 10a, eine erste Einlass-Entlüftungs-Magnetventileinheit 20a und ein erstes Relaisventil 40a auf.

Das erste Relaisventil 40a ist mit einem Eingang 43a, mit einem Ausgang bzw. Arbeitsausgang 44a, einem Steuereingang 45a und einem Entlüftungsausgang 46a vorgesehen. Der erste Druckluftanschluss 10a ist mit dem Eingang 40a des ersten Relaisventils 40a verbunden.

Das erste Relaisventil 40a stellt ein bistabiles Element dar.

In Abhängigkeit von dem Druck an dem Steuereingang 45a sind an dem Ausgang 44a des ersten Relaisventils 40a verschiedene Betriebszustände der ersten Parkbremseinheit 1a in Form von Luftdrücken abbildbar, insbesondere ein Parkzustand, ein Fahrzustand und ein abgestufter Bremszustand.

Insbesondere ist in Fig. 1 das Ausführungsbeispiel im Parkzustand dargestellt.

Des Weiteren kann im Sinne des ersten Ausführungsbeispiels gemäß Fig. 1 auch ein Stretch-Brake-Zustand vorgesehen sein.

Die erste Einlass-Entlüftungs-Magnetventileinheit 20a ist mit einem ersten Einlassventil 21a und einem ersten Entlüftungsventil 22a vorgesehen. Nach Fig. 1 weist das erste Entlüftungsventil 22a einen ersten Entlüftungsausgang 23a auf.

Das erste Einlassventil 21a und das erste Entlüftungsventil 22a sind als 2/2-Wegeventile vorgesehen.

Das erste Einlassventil 21a ist stromlos geschlossen ausgestaltet. Das erste Entlüftungsventil 22a ist stromlos geschlossen ausgestaltet.

Der erste Druckluftanschluss 10a ist mit der ersten Einlass-Eingangs-Magnetventileinheit 20a, insbesondere mit dem ersten Einlassventil 21a verbunden.

Der erste Druckluftanschluss 10a ist hier repräsentiert durch eine nicht näher dargestellte Druckluftquelle sowie einem gezeigten ersten Rückschlagventil 11a.

Des Weiteren ist die erste Parkbremseinheit 1 mit einer ersten Steuerleitung 41a vorgesehen.

Die erste Steuerleitung 41a ist mit der ersten Einlass-Entlüftungs-Magnetventilelnheit 20a derart verbunden, so dass das erste Einlassventil 21a und das erste Entlüftungsventil 22a unabhängig voneinander mit der ersten Steuerleitung 41a verbunden sind.

Die erste Steuerleitung 41 ist mit dem Steuereingang 45a des ersten Relaisventils 40a verbunden. Somit ist eine Verbindung zwischen der ersten Einlass-Entlüftungs-Magnetventileinheit 20a und dem ersten Steuereingang 45a des ersten Relaisventils 40a verfügbar.

Die erste Steuerleitung 41a weist stromaufwärts des ersten Relaisventils 40a eine erste Abzweigung 42a auf.

Des Weiteren weist die erste Parkbremseinheit 1a eine Federbremsleitung 51 auf. Die Federbremsleitung 51 Ist über die erste Abzweigung 42a mit der ersten Steuerleitung 41a verbunden.

Es liegt somit eine Verbindung zwischen der Federbremsleitung 51 und dem Steuereingang 45a des ersten Relaisventils 40a vor.

Des Weiteren ist die Federbremsleitung 51 über eine erste Ausgangs-Abzweigung 81a an eine erste Ausgangsieitung 80a angeschlossen.

Die erste Ausgangsleitung 80a ist mit dem Ausgang 44a des ersten Relaisventils 40a verbunden, ebenso wie mit wenigstens einem Druckluftausgang 71 und 72 der ersten Parkbremseinheit 1a.

So ist die Federbremsleitung 51 über erste die Ausgangs-Abzweigung 81a mit dem Ausgang bzw. Arbeitsausgang 44a des ersten Relaisventils 40a verbunden.

In diesem Sinne bildet die Federbremsleitung 51 eine Rückkopplungsverbindung zwischen dem Ausgang 44a und dem Steuereingang 45a des ersten Relaisventils 40 aus.

Von dem Ausgang 44a des ersten Relaisventils 40a kann Druckluft nach Fig. 1 entlang der ersten Ausgangsleitung 80a über ein Wechsel-Rückschlagventil 70 an einen Federspeicherbremszylinderausgang 71 der ersten Parkbremseinheit 1a für das Zugfahrzeug eines Kraftfahrzeuges weitergeleitet werden.

Das Wechsel-Rückschlagventil 70 ist über die erste Ausgangsleitung 80a mit der Federbremsleitung 51, dem Federspeicherbremszylinderausgang 71 und einem Betriebsbremsenausgang 72 der ersten Parkbremseinheit 1a für ein Zugfahrzeug verbunden.

Der Federspeicherbremszylinderausgang 71 und der Betriebsbremsenausgang 72 stellen in diesem Sinne Druckluftausgänge der ersten Parkbremseinheit 1a dar.

Das Wechsel-Rückschlagventil 70 folgt in seinem Schaltverhalten dem vorliegenden Druckgefälle.

Vorzugsweise ist das Wechsel-Rückschlagventil 70 als ein sogenanntes Select-High-Ventil vorgesehen.

So kann der Federspeicherbremszylinderausgang 71 mit einem hohen Druck des Ausgangs 44a des ersten Relaisventils 40a belüftet werden, wobei die Verbindung zum Betriebsbremsenausgang 72, an dem ein niedrigerer Druck anliegt, gesperrt ist.

Darüber hinaus ist bei Betätigung der Betriebsbremse und einem damit verbundenen Druckaufbau an dem Betriebsbremsenausgang 72 ein Übergang von Druckluft von dem Betriebsbremsenausgang 72 zu dem Federspeicherbremszylinderausgang 71 über das Wechsel-Rückschlagventil 70 möglich.

Sofern an dem Betriebsbremsenausgang 72 ein höherer Druck anliegt als an dem Ausgang 44a des ersten Relaisventils 40a, eröffnet das Wechsel-Rückschlagventil 70 gemäß dem Druckgefälle eine Verbindung zwischen dem Betriebsbremsenausgang 72 und dem Federspeicherbremszylinderausgang 71.

Es ist eine kombinierte Bremswirkung bei Betätigung der Betriebsbremse des Zugfahrzeugs an dem Betriebsbremsenausgang 72 in Kombination mit wenigstens einem Federspeicherbremszylinder des Zugfahrzeugs an dem Federspeicherbremszylinderausgang 71 anhand des Wechsel-Rückschlagventils 70 erzielbar.

Des Weiteren ist in der Federbremsleitung 51 ein Federbremsventil 50 angeordnet. Somit ist das Federbremsventil 50 mit dem Steuereingang 45a und dem Ausgang 44a des ersten Relaisventils 40a verbunden.

Das Federbremsventil 50 ist in stromlosen Zustand offen geschaltet.

Nach Fig. 1 ist das Federbremsventil 50 als ein 2/2-Wegeventil vorgesehen.

Zwischen dem ersten Relaisventil 40a und der ersten Abzweigung 42a der ersten Steuerleitung 41a, insbesondere zwischen dem Federbremsventil 50 und der ersten Abzweigung 42a der ersten Steuerleitung 41a, ist eine erste Drosseleinheit 52a in der Federbremsleitung 51 angeordnet.

Allgemein ist im Sinne der vorliegenden Erfindung bevorzugter Weise stets vorgesehen, dass die erste Drosseleinheit 52a und das Federbremsventil 50 entlang der Federbremsleitung 51 zwischen der ersten Abzweigung 41a der ersten Steuerleitung 41a und der ersten Ausgangs-Abzweigung 81a der ersten Ausgangsleitung 80a angeordnet sind.

Eine Verbindung des ersten Relaisventils 40a, insbesondere des Ausgangs 44a, und des Wechsel-Rückschlagventils 70, insbesondere des Betriebsbremsausgangs 72 und/oder des Federspeicherbremszylinderausgangs 71, zu der ersten Steuerleitung 41a entlang der Federbremsleitung 51 ist mittels dem Federbremsventil 50 und der ersten Drosseleinheit 52 Steuer- bzw. kontrollierbar.

Anhand der rückkoppelnden Federbremsleitung 51 mit der ersten Drosseleinheit 52a und dem Federbremsventil 50 kann der Fluiddruck bzw. Luftdruck an dem Ausgang 44a des ersten Relaisventils 40a gezielt eingestellt und gesteuert bzw. geregelt werden.

Zwischen dem Federbremsventil 50 und dem Ausgang 44a des ersten Relaisventils 40a ist darüber hinaus ein erster Druckluftsensor 73a angeordnet. Somit ist der Luftdruck bzw. Fluiddruck an dem Ausgang 44a des ersten Relaisventils 40a gezielt steuerbar und/oder regelbar.

Des Weiteren ist in Fig. 1 die **zweite Parkbremseinheit 1b** gezeigt.

Die zweite Parkbremseinheit 1b weist einen zweiten Druckluftanschluss 10b, ein zweites Relaisventil 40b und eine zweite Einlass-Entlüftungs-Magnetventileinheit 20b auf.

Der zweite Druckluftanschluss 10b ist hier repräsentiert durch eine nicht näher dargestellte Druckluftquelle sowie einem gezeigten zweiten Rückschlagventil 11b. Insbesondere kann im Sinne der vorliegenden Erfindung vorgesehen sein, dass der erste und zweite Druckluftanschluss 10a und 10b mit einer gemeinsamen Druckluftquelle verbunden sind.

Alternativ kann im Sinne der vorliegenden Erfindung vorgesehen sein, dass der erste und zweite Druckluftanschluss 10a und 10b als ein gemeinsamer Druckluftanschluss ausgebildet sind.

Die zweite Einlass-Entlüftungs-Magnetventileinheit 20b ist mit einem zweiten Einlassventil 21b, einem zweiten Entlüftungsventil 22b und einem zweiten Entlüftungsausgang 23b gezeigt.

Der zweite Entlüftungseingang 23b kann gemäß Fig. 1 in dem zweiten Entlüftungsventil 22b integriert vorliegen.

Die zweite Einlass-Entlüftungs-Magnetventileinheit 20b ist somit vergleichbar zu der ersten Einlass-Entlüftungs-Magnetventileinheit 20a ausgestaltet.

Das zweite Einlassventil 21b ist bevorzugter Weise mit dem zweiten Druckluftanschluss 10b verbunden.

Des Weiteren weist die zweite Parkbremseinheit 1b eine zweite Steuerleitung 41b auf.

Die zweite Einlass-Entlüftungs-Magnetventlleinhelt 20b und das zweite Relaisventil 40b sind über die zweite Steuerleitung 41b miteinander verbunden.

Ebenso wie das erste Relaisventil 40a, weist das zweite Relaisventil 40b einen Eingang 43b, einen Ausgang 44b, einen Steuereingang 45b und einen Entlüftungsausgang 46b auf.

Die zweite Steuerleitung 41b ist mit dem Steuereingang 45b des zweiten Relaisventils 40b verbunden.

Die Funktionsweise des ersten und zweiten Relaisventils 40a; 40b ist bevorzugter Weise identisch.

Stromaufwärts des zweiten Relaisventils 40b ist in der zweiten Steuerleitung 41b eine zweite Abzweigung 42b vorgesehen.

Darüber hinaus weist die zweite Parkbremseinheit 1b eine Rückkopplungsleitung 53 auf, die über die zweite Abzweigung 42b mit der zweiten Steuerleitung 41b verbunden ist.

Die Rückkopplungsleitung 53 ist über eine zweite Ausgangs-Abzweigung 81b an eine zweite Ausgangsleitung 80b angeschlossen.

Die zweite Ausgangsleitung 80b ist mit dem Ausgang 44b des zweiten Relaisventils 40b verbunden.

Somit bildet die Rückkopplungsleitung 53 eine Rückkopplung von dem Ausgang 44b des zweiten Relaisventils 40b über die zweite Ausgangsleitung 80b, die zweite Ausgangs-Abzweigung 81, die zweite Abzweigung 42b und die Steuerleitung 41b zu dem Steuereingang 45b des zweiten Relaisventils 40b aus.

In der Rückkopplungsleitung 53 ist zwischen der zweiten Ausgangs-Abzweigung 81b der zweiten Ausgangsleitung 80b und der zweiten Abzweigung 42b der zweiten Steuerleitung 41b eine zweite Drosseleinheit 52b angeordnet.

Mit der Rückkopplungsleitung 53 und der zweiten Drosseleinheit 52b liegt somit kontinuierlich eine Rückkopplung zwischen dem Ausgang 44b und dem Steuereingang 45b des zweiten Relaisventils 40b vor.

Die zweite Parkbremseinheit 1b weist des Weiteren einen Anhänger-Steuerausgang 74 als weiteren Druckluftausgang zur Verbindung mit wenigstens einem Federspeicherbremszylinder eines Anhängers auf.

Allgemein ist im Sinne der vorliegenden Erfindung bevorzugter Weise stets vorgesehen, dass die zweite Drosseleinheit 52b entlang der Rückkopplungsleitung 53 zwischen der zweiten Abzweigung 42b der zweiten Steuerleitung 41b und der zweiten Ausgangs-Ableitung 81b der zweiten Ausgangsleitung 80b angeordnet ist.

Eine Verbindung des zweiten Relaisventils 40b, insbesondere des Ausgangs 44b, und des Anhänger-Steuerausgangs 74 zu der zweiten Steuerleitung 41b entlang der Rückkopplungsleitung 53 ist über die zweite Drosseleinheit 52b verfügbar.

Entlang der zweiten Ausgangsleitung 80b ist darüber hinaus ein zweiter Drucksensor 73b angeordnet. Auf diese Weise kann ein eingestellter Druck an dem Ausgang 44b des zweiten Relaisventils 40b, der sich bis zum Anhänger-Steuerausgang 74 ausbreiten kann, erfasst werden.

Im Wesentlichen sind die erste Parkbremseinheit 1a und die zweite Parkbremseinheit 1b somit in ihrem Aufbau miteinander vergleichbar.

Die erste Parkbremseinheit 1a unterscheidet sich gemäß Fig. 1 im Wesentlichen durch die Anordnung des Federbremsventils 50 in der rückkoppelnden Federbremsleitung 51.

Des Weiteren liegen wesentliche Unterschiede der ersten Parkbremseinheit 1a in der der Anordnung des Wechsel-Rückschlagventils 70 zur Verbindung des Federspeicherbremszylinderausgang 71 und des Betriebsbremsenausgangs 72 mit dem Ausgang 44a des ersten Relaisventils 40a.

Im Folgenden wird die Wirkungsweise der Parkbremseinrichtung 1 gemäß den Figuren 1 bis 5 erläutert.

In einem **Parkzustand** (wie in Fig. 1 dargestellt) sind das erste und das zweite Einlassventil 21a; 21b stromlos geschlossen geschaltet. So kann keine Druckluft von dem ersten Druckluftanschluss 10a bzw. von einer externen Druckluftquelle in die erste Steuerleitung 41a bzw. die zweite Steuerleitung 41b übertreten.

Das Federbremsventil 50 der ersten Parkbremseinheit 1a ist stromlos offen geschaltet. Somit liegt jeweils eine Rückkopplung zwischen dem Ausgang 44a; 44b und dem Steuereingang 45a; 45b des ersten und zweiten Relaisventils 40a; 40b vor.

Des Weiteren ist der Eingang 43a; 43b des ersten und zweiten Relaisventils 40a; 40b mit Druckluft versorgt.

Indem an den Steuereingängen 45a; 45b des ersten und zweiten Relaisventils 40a; 40b kein Druck anliegt, sind die jeweiligen Entlüftungsausgänge 46a; 46b geöffnet.

Die Federbremsleitung 51 und die Rückkopplungsleitung 53 sind über die Entlüftungsausgänge 46a; 46b entlüftet.

Anhand des stromlos offen geschalteten Federbremsventils 50 ist auch die erste Steuerleitung 41a über den Entlüftungsausgang 46a entlüftet, ebenso wie zweite Steuerleitung 41b über den Entlüftungsausgang 46b entlüftet ist.

Somit ist auch der Federspeicherbremszylinderausgang 71 der ersten Parkbremseinheit 1a und der Anhänger-Steuerausgang 74 der zweiten Parkbremseinheit 1b entlüftet. Die Federspeicherbremszylinder des Zugfahrzeugs und des Anhängers sind in diesem Sinne aktiviert und erbringen eine Bremskraft.

Der Betriebsbremsenausgang 72 der ersten Parkbremseinheit 1b ist im Parkzustand entlüftet. Die Betriebsbremse des Zugfahrzeugs ist in diesem Sinne gelöst.

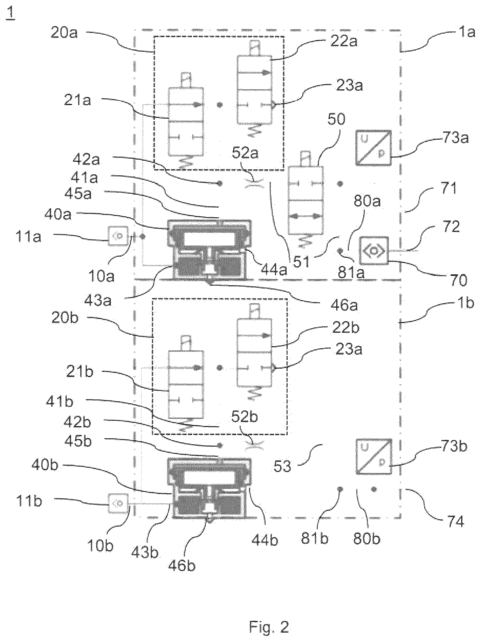

Um von einem **Parkzustand in einen Fahrzustand** zu gelangen wird gemäß Fig. 2 gegenüber dem Parkzustand (wie in Fig. 1 gezeigt) das erste und das zweite Einlassventil 21a; 21b offen bzw. durchlässig geschaltet.

Das Federbremsventil 50 ist getrennt bzw. geschlossen geschaltet. Die Federbremsleitung 51 ist während des Wechsels des Betriebszustands unterbrochen. Durch die offen geschalteten Einlassventile 21a; 21b wird Druckluft in die erste und zweite Steuerleitungen 41a; 41b eingeleitet. Ober die Steuerleitungen 41a; 41b werden die Steuereingänge 45a; 45b des ersten und zweiten Relaisventils 40a; 40b belüftet.

Bei Erreichen bzw. Überschreiten eines Schwelldrucks wird in den Relaisventilen 40a; 40b jeweils eine Verbindung zwischen dem Eingang 43a; 43b und dem Ausgang 43a; 43b hergestellt, sodass Druckluft an den Ausgängen 44a; 44b bereitgestellt wird.

Bei Erreichen bzw. Überschreiten des Schwelldrucks an den Steuereingängen 45a; 45b werden die Entlüftungsausgänge 46a; 46b des ersten und zweiten Relaisventils 40a; 40b geschlossen.

In der ersten Parkbremseinheit 1a wird der hohe Druck des Ausgangs 44a, gemäß der vorliegenden Druckdifferenz, entlang der zweiten Ausgangsleitung 80b über das Wechsel-Rückschlagventil 70 an den Federspeicherbremszylinderausgang 71 weitergeleitet.

In der zweiten Parkbremseinheit 1b wird der hohe Druck des Ausgangs 44b an den Anhänger-Steuerausgang 74 weitergeleitet.

Der Federspeicherbremszylinderausgang 71 und der Anhänger-Steuerausgang 74 werden somit belüftet. In diesem Sinne werden die Parkbremse des Zugfahrzeugs sowie des Anhängers gelöst, so dass keine Bremskraft aufgebracht wird.

Anhand des geschlossen geschalteten Federbremsventils 50 erfolgt zumindest in der ersten Parkbremseinheit 1a kein Druckluftverlust über die Rückkopplungsverbindung in Form der Federbremsleitung 51. Der Federspeicherbremszylinderausgang 71 kann gezielt und effizient belüftet werden.

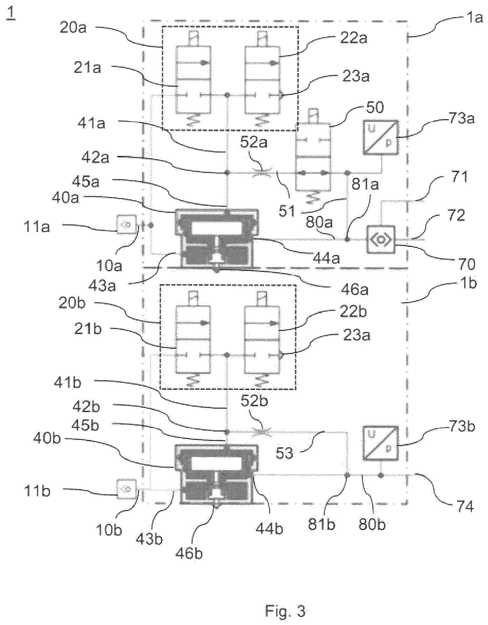

Sobald der Federspeicherbremszylinderausgang 71 und der Anhänger-Steuerausgang 74 hinreichend belüftet sind, werden das erste und das zweite Einlassventil 21a; 21b gemäß Fig. 3 getrennt bzw. geschlossen geschaltet. Das Federbremsventil 50 wird nach Fig. 3 offen bzw. durchlässig geschaltet.

Somit sind der Anhänger-Steuerausgang 74 und der Federspeicherbremszylinderausgang 71 belüftet. Der Betriebsbremsenausgang 72 für ein Zugfahrzeug ist entlüftet.

Im Sinne von Fig. 3 ist ein Fahrzustand des Kraftfahrzeuges, mit einem Zugfahrzeug und einem Anhänger, erreicht.

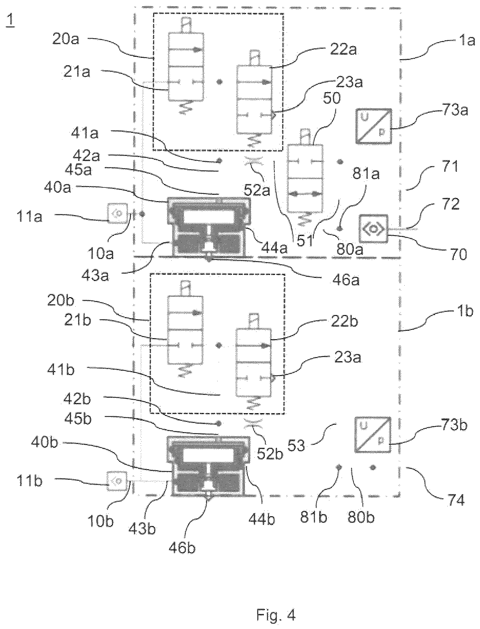

Um von einem **Fahrzustand wieder in einen Parkzustand** zu gelangen, wird nach Fig. 4 gegenüber dem Fahrzustand (wie in Fig. 3 dargestellt) das erste und das zweite Entlüftungsventil 22a; 22b offen bzw. durchlässig geschaltet, so dass Druckluft über den ersten und zweiten Entlüftungsausgang 23a; 23b austreten kann.

Das Federbremsventil 50 ist getrennt geschaltet.

Ein hoher Druck der ersten und zweiten Steuerleitung 41a; 41b in Verbindung mit den Steuereingängen 45a; 45b wird abgebaut bzw. entlüftet.

Anhand des abnehmenden Drucks in den Steuereingängen 45a; 45b, wird die jeweilige Verbindung zwischen den Eingängen 43a; 43b und den Ausgängen 44a; 44b des ersten und zweiten Relaisventils 40a; 40b getrennt. Die Entlüftungsausgänge 46a; 46b werden geöffnet.

Ein hoher Druck aus der Federbremsleitung 51 in Verbindung mit dem Federspeicherbremszylinderausgang 71 und aus der Rückkopplungsleitung 53 in Verbindung mit dem Anhänger-Steuerausgang 74 wird über die Entlüftungsausgänge 46a; 46b entlüftet.

Aufgrund der kontinuierlich vorliegenden Rückkopplung über die Rückkopplungsleitung 53 mit der zweiten Drosseleinheit 52b, findet ebenso eine Entlüftung des Anhänger-Steuerausgangs 74 über das offen geschaltete, zweite Entlüftungsventil 22b statt. Sobald der Federspeicherbremszylinderausgang 71 und der Anhänger-Steuerausgang 74 hinreichend entlüftet sind, werden die Entlüftungsventile 22a; 22b geschlossen geschaltet, gemäß dem Parkzustand in Fig. 1.

Ebenso wird das Federbremsventil 50 wieder in den stromlos offenen Schaltzustand gebracht.

Somit ist ein Parkzustand gemäß Fig. 1 mit dem entlüfteten Federspeicherbremszylinderausgang 71 und dem entlüfteten Anhänger-Steuerausgang 74 erreicht. Die Parkbremse des Zugfahrzeugs sowie des Anhängers, in Form von Federspeicherbremszylinder, sind aktiviert und bringen eine entsprechende Bremswirkung auf.

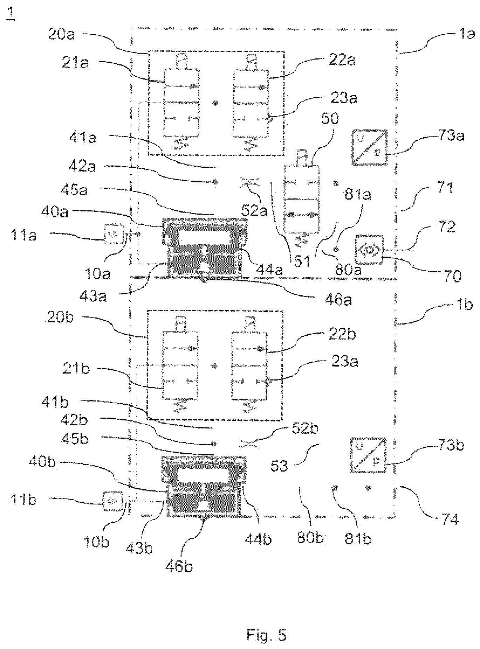

Des Weiteren kann aus dem Fahrzustand heraus ein abgestufter Bremszustand gemäß Fig. 5 herbeigeführt werden.

Das Federbremsventil 50 ist in Fig. 5 getrennt geschaltet.

Die Einlassventile 21a; 21b und die Entlüftungsventile 22a; 22b sind vorzugsweise teilweise offen bzw. durchlässig geschaltet, insbesondere durch mehrere kurze, aufeinanderfolgende Betätigungen.

Somit wird Druckluft in die erste und zweite Steuerleitung 41a; 41b eingeleitet. Die Steuereingänge 45a; 45a des ersten und zweiten Relaisventils 40a; 40b werden mit einem spezifischen Druck belüftet, der zwischen 0 bar und dem maximalen Systemdruck liegt.

Der spezifische Druck ist in Abhängigkeit von dem Öffnungsgrad der Einlassventile 21a; 21b und der Entlüftungsventile 22a; 22b einstellbar.

Anhand des spezifischen Drucks an den Steuereingängen 45a; 45b werden vorzugsweise proportionale Drücke an den Ausgängen 44a; 44b des ersten und zweiten Relaisventils 40a; 40b bereitgestellt.

Der Federspeicherbremszylinderausgang 71 und der Anhänger-Steuerausgang 74 werden Im Sinne von Fig. 5 derart belüftet, dass eine teilweise Bremswirkung des Zugfahrzeugs und des Anhängers aufgebracht wird.

Es ist ein abgestufter Bremszustand mit einer teilweisen Bremswirkung des Kraftfahrzeugs bereitstellbar.

In diesem Sinne können an den Ausgängen 44a; 44b des ersten und zweiten Relaisventils 40a; 40b konstante Drücke über einen spezifischen Zeitraum gehalten und stufenweise verändert werden.

Indem der Federspeicherbremszylinderausgang 71 und der Anhänger-Steuerausgang 74 mit zeitweise konstanten, stufenweise veränderten Drücken belüftet werden, ist die Bremswirkung des Zugfahrzeugs und des Anhängers stufenweise variierbar.

Darüber hinaus ist es auch möglich einen Stretch-Brake-Zustand mit dem Ausführungsbeispiel im Sinne der Fig. 1 bis 5 umzusetzen, Insbesondere aus einem Fahrzustand gemäß Fig. 3 heraus. Das Umschalten in den Betriebszustand für die Stretch-Brake-Funktion orientiert sich im Wesentlichen an den vorstehend beschrieben Schaltvorgängen.

Vorzugsweise ist der Federspeicherbremszylinderausgang 71 in dem Stretch-Brake-Zustand belüftet.

Der Anhänger-Steuerausgang 74 ist bedarfsweise entlüftbar bzw. belüftbar, insbesondere anhand des zweiten Relaisventils 40b in Verbindung mit der zweiten Einlass-Entlüftungs-Magnetventileinheit 20b.

So kann der Anhänger-Steuerausgang 74 zweckmäßig, insbesondere abstufbar, mit Druckluft belüftet werden. Es ist eine abstufbare Bremswirkung des Anhängers verfügbar, um das Kraftfahrzeug zu strecken und auf diese Weise zu stabilisieren. Allgemein kann im Sinne der vorliegenden Erfindung anhand der ersten und zweiten Drosseleinheit 52a; 52b und Insbesondere anhand des Federbremsventil 50 somit eine vorteilhafte Umschaltung zwischen den Betriebszuständen erreicht werden, indem die rückkoppelnde Federbremsleitung 51 bedarfsweise gesperrt sein kann.

### BEZUGSZEICHENLISTE

- 1: Parkbremseinrichtung
- 1a: erste Parkbremseinheit
- 1b: zweite Parkbremseinheit
- 10a: erster Druckluftanschluss
- 10b: zweiter Druckluftanschluss
- 11a: erstes Rückschlagventil
- 11b: zweites Rückschlagventil
- 20a: erste Einlass-Entlüftungs-Magnetventileinheit
- 20b: zweite Einlass-Entlüftungs-Magnetventileinheit
- 21a: erstes Einlassventil
- 21b: zweites Einlassventil
- 22a: erstes Entlüftungsventil
- 22b: zweites Entlüftungsventil
- 23a: erster Entlüftungsausgang
- 23b: zweiter Entlüftungsausgang
- 40a: erstes Relaisventil
- 40b: zweites Relaisventil
- 41a: erste Steuerleitung
- 41b: zweite Steuerleitung
- 42a: erste Abzweigung
- 42b: zweite Abzweigung
- 43a: Eingang des ersten Relaisventils
- 43b: Eingang des zweiten Relaisventils
- 44a: Ausgang des ersten Relaisventils
- 44b: Ausgang des zweiten Relaisventils
- 45a: Steuereingang des ersten Relaisventils
- 45b: Steuereingang des zweiten Relaisventils
- 46a: Entlüftungsausgang des ersten Relaisventils
- 46b: Entlüftungsausgang des zweiten Relaisventils
- 50: Federbremsventil
- 51: Federbremsleitung52aerste Drosseleinheit
- 52b: zweite Drosseleinheit
- 53: Rückkopplungsleitung
- 70: Wechsel-Rückschlagventil
- 71: Federspeicherbremszylinderausgang
- 72: Betriebsbremsenausgang
- 73a: erster Druckluftsensor
- 73b: zweiter Druckluftsensor
- 74: Anhänger-Steuerausgang
- 80a: erste Ausgangsleitung
- 80b: zweite Ausgangsleitung
- 81a: erste Ausgangs-Abzweigung
- 81b: zweite Ausgangs-Abzweigung

## Patentansprüche

1. Parkbremseinrichtung (1) für Kraftfahrzeuge mit wenigstens einer ersten Parkbremseinheit (1a) und einer zweiten Parkbremseinheit (1b),
wobei die erste Parkbremseinheit (1a) wenigstens einen ersten Druckluftanschluss (10a), eine erste Einlass-Entlüftungs-Magnetventileinheit (20a), ein erstes Relaisventil (40a), ein Federbremsventil (50) und wenigstens einen ersten Druckluftausgang (71; 72) aufweist,
wobei der erste Druckluftanschluss (10a) mit der ersten Einlass-Entlüftungs-Magnetventileinheit (20a) und dem ersten Relaisventil (40a) verbunden ist,
wobei eine erste Steuerleitung (41a) derart in der ersten Parkbremseinheit (1a) vorgesehen ist, so dass das erste Relaisventil (40a) mit der ersten Einlass-Entlüftungs-Magnetventileinheit (20a) verbunden ist, wobei die erste Steuerleitung (41a) stromaufwärts des ersten Relaisventils (40a) eine erste Abzweigung (42a) aufweist, wobei eine erste Ausgangsleitung (80a) in der ersten Parkbremseinheit (1a) vorgesehen ist, die mit dem wenigstens einen ersten Druckluftausgang (71; 72) verbunden ist und eine erste Ausgangs-Abzweigung (81a) aufweist,
wobei eine Federbremsleitung (51) in der ersten Parkbremseinheit (1a) vorgesehen ist, die über die erste Abzweigung (42a) mit der ersten Steuerleitung (41a) und über die erste Ausgangs-Abzweigung (81a) mit der Ausgangsleitung (80a) verbunden ist, wobei die erste Parkbremseinheit (1a) ein Federbremsventil (50) aufweist, das in der Federbremsleitung (51) angeordnet und mit dem ersten Relaisventil (40a) verbunden ist, und eine erste Drosseleinheit (52a), die in der Federbremsleitung (51) zwischen der ersten Ausgangs-Abzweigung (81a) der ersten Ausgangsleitung (80a) und der ersten Abzweigung (42a) der ersten Steuerleitung (41a) angeordnet ist.

2. Parkbremseinrichtung (1) nach Anspruch 1,
**dadurch gekennzeichnet, dass**
die Federbremsleitung (51) in Verbindung mit der ersten Abzweigung (42a) und der ersten Ausgangs-Abzweigung (81a) über die erste Drosseleinheit (52a) und das Federbremsventil (50) eine Rückkopplungsverbindung zwischen einem Steuereingang (45a) und einem Ausgang (44a) des ersten Relaisventils (40a) ausbildet.

3. Parkbremseinrichtung (1) nach Anspruch 1 oder 2,
**dadurch gekennzeichnet, dass**
das Federbremsventil (51) als ein stromlos offenes Magnetventil vorgesehen ist.

4. Parkbremseinrichtung (1) nach einem der vorhergehenden Ansprüche,
**dadurch gekennzeichnet, dass**
die erste Einlass-Entlüftungs-Magnetventileinheit (20a) derart ausgestaltet ist, dass zwischen dem ersten Druckluftanschluss (10a) und der ersten Steuerleitung (41a) wenigstens ein erstes Einlass-Magnetventil (21a) und zwischen der ersten Steuerleitung (41a) und einem ersten Entlüftungsausgang (23a) ein erstes Entlüftungs-Magnetventil (22a) vorgesehen ist.

5. Parkbremseinrichtung (1) nach einem der vorhergehenden Ansprüche, **dadurch gekennzeichnet, dass**
die zweite Parkbremseinheit (1b) wenigstens einen zweiten Druckluftanschluss (10b) aufweist, eine zweite Einlass-Entlüftungs-Magnetventileinheit (20b), ein zweites Relaisventil (40b) und wenigstens einen weiteren Druckluftausgang (74),
wobei der zweite Druckluftanschluss (10b) mit dem zweiten Relaisventil (40b) verbunden ist, wobei eine zweite Steuerleitung (41b) derart in der zweiten Parkbremseinheit (1b) vorgesehen ist, so dass das zweite Relaisventil (40b) mit der zweiten Einlass-Entlüftungs-Magnetventileinheit (20b) verbunden ist,
wobei die zweite Steuerleitung (41b) stromaufwärts des zweiten Relaisventils (40b) eine zweite Abzweigung (42b) aufweist,
wobei eine zweite Ausgangsleitung (80b) in der zweiten Parkbremseinheit (1b) vorgesehen ist, die mit dem wenigstens einen weiteren Druckluftausgang (74) verbunden ist und eine zweite Ausgangs-Abzweigung (81b) aufweist,
wobei eine Rückkopplungsleitung (53) in der zweiten Parkbremseinheit (1b) vorgesehen ist, die über die zweite Abzweigung (42b) mit der zweiten Steuerleitung (41b) und über die zweite Ausgangs-Abzweigung (81b) mit der zweiten Ausgangsleitung (80b) verbunden ist,
wobei die zweite Parkbremseinheit (1b) eine zweite Drosseleinheit (52b) aufweist, die in der Rückkopplungsleitung (53) zwischen der zweiten Ausgangs-Abzweigung (81b) der zweiten Ausgangsleitung (80b) und der zweiten Abzweigung (42b) der zweiten Steuerleitung (41a) angeordnet ist.

6. Parkbremseinrichtung (1) nach Anspruch 5,
**dadurch gekennzeichnet, dass**
die zweite Einlass-Entlüftungs-Magnetventileinheit (20b) mit dem zweiten Druckluftanschuss (10b) verbunden ist.

7. Parkbremseinrichtung (1) nach Anspruch 5 oder 6,
**dadurch gekennzeichnet, dass**
wobei die Rückkopplungsleitung (53) in Verbindung mit der zweiten Abzweigung (42b) und der zweiten Ausgangs-Abzweigung (81b) über die zweite Drosseleinheit (52b) eine Rückkopplungsverbindung zwischen einem Steuereingang (45b) und einem Ausgang (44b) des zweiten Relaisventils (40b) ausbildet.

8. Parkbremseinrichtung (1) nach einem der Ansprüche 5 bis 7,
**dadurch gekennzeichnet, dass**
die zweite Einlass-Entlüftungs-Magnetventileinheit (20b) mit einem wenigstens einem zweiten Einlassventil (21b), einem zweiten Entlüftungsventil (22b) und einem zweiten Entlüftungsausgang (23b) derart ausgestaltet ist, dass das zweite Einlassventil (21b) in Verbindung mit der zweiten Steuerleitung (41b) vorgesehen ist und zwischen der zweiten Steuerleitung (41b) und einem zweiten Entlüftungsausgang (23b) ein zweites Entlüftungsventil (22b) vorgesehen ist.

9. Parkbremseinrichtung (1) nach einem der vorhergehenden Ansprüche, **dadurch gekennzeichnet, dass**
das erste und zweite Einlassventil (21a; 21b) als stromlos geschlossene Magnetventile vorgesehen sind.

## Claims

1. Parking brake device (1) for motor vehicles, having at least one first parking brake unit (1a) and a second parking brake unit (1b),
wherein the first parking brake unit (1a) has at least one first compressed air connection (10a), a first inlet venting solenoid unit (20a), a first relay valve (40a), a spring brake valve (50) and at least one first compressed air outlet (71, 72),
wherein the first compressed air connection (10a) is connected to the first inlet venting solenoid unit (20a) and the first relay valve (40a),
wherein a first control line (41a) is provided at the first parking brake unit (1a) in such a way that the first relay valve (40a) is connected to the first inlet venting solenoid unit (20a), the first control line (41a) having a first branch (42a) upstream of the first relay valve (40a),
wherein a first outlet line (80a) is provided in the first parking brake unit (1a), which first outlet line (80a) is connected to the at least one first compressed air outlet (71; 72) and has a first outlet branch (81a),
wherein a spring brake line (51) is provided in the first parking brake unit (1a), which spring brake line (51) is connected to the first control line (41a) via the first branch (42a) and to the outlet line (80a) via the first outlet branch (81a),
wherein the first parking brake unit (1a) has a spring brake valve (50), which is located in the spring brake line (51) and connected to the first relay valve (40a), and a first restrictor unit (52a), which is located in the spring brake line (51) between the first outlet branch (81a) of the first outlet line (80a) and the first branch (42a) of the first control line (41a).

2. Parking brake device according to claim 1,
**characterised in that**
the spring brake line (51) forms, in combination with the first branch (42a) and the first outlet branch (81a), a feedback connection between a first control input (45a) and an outlet (44a) of the first relay valve (40a) via the first restrictor unit (52a) and the spring brake valve (50).

3. Parking brake device according to claim 1 or 2,
**characterised in that**
the spring brake valve (51) is Parking brake device according to any of the preceding claims,
**characterised in that**
the spring brake valve (51) is provided in the form of a deenergised open solenoid valve.

4. Parking brake device according to any of the preceding claims,
**characterised in that**
the first inlet venting solenoid unit (20a) is designed such that a first inlet solenoid valve (21a) is provided between the first compressed air connection (10a) and the first control line (41a) and a first venting solenoid valve (22a) is provided between the first control line (41a) and a first venting outlet (23a).

5. Parking brake device according to any of the preceding claims,
**characterised in that**
the second parking brake unit (1b) has at least one second compressed air connection (10b), a second inlet venting solenoid unit (20b), a second relay valve (40b), and at least one further compressed air outlet (74),
wherein the second compressed air connection (10b) is connected to the second relay valve (40b), wherein a second control line (41b) is provided at the second parking brake unit (1b) in such a way that the second relay valve (40b) is connected to the second inlet venting solenoid unit (20b), the second control line (41b) having a second branch (42b) upstream of the second relay valve (40b),
wherein a second outlet line (80b) is provided in the second parking brake unit (1b), which second outlet line (80b) is connected to the at least one further compressed air outlet (74) and has a second outlet branch (81b),
wherein a feedback line (53) is provided in the second parking brake unit (1b), which feedback line (53) is connected to the second control line (41b) via the second branch (42b) and to the second outlet line (80b) via the second outlet branch (81b),
wherein the second parking brake unit (1b) has a second restrictor unit (52b), which is located in the feedback line (53) between the second outlet branch (81b) of the second outlet line (80b) and the second branch (42b) of the second control line (41b).

6. Parking brake device according to claim 5,
**characterised in that**
the second inlet venting solenoid unit (20b) is connected to the second compressed air connection (10b).

7. Parking brake device according to claim 5 or 6,
**characterised in that**
the feedback line (53) forms, in combination with the second branch (42b) and the second outlet branch (81b), a feedback connection between a control input (45b) and an outlet (44b) of the second relay valve (40b) via the second restrictor unit (52b).

8. Parking brake device according to any of claims 5 to 7,
**characterised in that**
the second inlet venting solenoid unit (20b) is equipped with at least one second inlet valve (21b), a second venting valve (22b) and a second venting outlet (23b) in such a way that the second inlet valve (21b) is provided in conjunction with the second control line (41b) and a second venting valve (22b) is provided between the second control line (41b) and a second venting outlet (23b).

9. Parking brake device according to any of the preceding claims,
**characterised in that**
the first and the second inlet valve (21a; 21b) are provided in the form of deenergised closed solenoid valves.

## Revendications

1. Dispositif (1) de frein de stationnement de véhicule automobile, comprenant au moins une première unité (1a) de frein de stationnement et une deuxième unité (1b) de frein de stationnement, dans lequel la première unité (1a) de frein de stationnement a au moins un premier raccord (10a) d'air comprimé, une première unité (20a) d'électrovanne d'admission - purge, une première vanne (40a) relais, une première vanne (50) de frein à ressort et au moins une première sortie (71 ; 72) d'air comprimé,
dans lequel le premier raccord (10a) d'air comprimé communique avec la première unité (20a) d'électrovanne d'admission - purge et avec la première vanne (40a) relais,
dans lequel il est prévu une première ligne (41a) de commande dans la première unité (1a) de frein de stationnement, de manière à ce que la première vanne (40a) relais communique avec la première unité (20a) d'électrovanne d'admission - purge, dans lequel la première ligne (41a) de commande a une première dérivation (42a) en amont de la première vanne (40a) relais,
dans lequel il est prévu, dans la première unité (1a) de frein de stationnement, une première ligne (80a) de sortie, qui communique avec la au moins une première sortie (71 ; 72) d'air comprimé et qui a une première dérivation (81a) de sortie,
dans lequel il est prévu, dans le première unité (1a) de frein de stationnement, une ligne (51) de frein à ressort, qui communique avec la première ligne (41a) de commande par la première dérivation (42a) et avec la ligne (80a) de sortie par la première dérivation (81a) de sortie,
dans lequel la première unité (1a) de frein de stationnement a une vanne (50) de frein à ressort, qui est montée dans la ligne (51) de frein à ressort et qui communique avec la première vanne (40a) relais, et une première unité (52a) d'étranglement, qui est montée dans la ligne (51) de frein à ressort entre la première dérivation (81a) de sortie de la première ligne (80a) de sortie et la première dérivation (42a) de la première ligne (41a) de commande.

2. Dispositif (1) de frein de stationnement suivant la revendication 1,
**caractérisé en ce que**
la ligne (51) de frein à ressort constitue, en liaison avec la première dérivation (42a) et la première dérivation (81a) de sortie par la première unité (52a) d'étranglement et la vanne (50) de frein à ressort, une liaison de réaction entre une entrée (45a) de commande et une sortie (44a) de la première vanne (40a) relais.

3. Dispositif (1) de frein de stationnement suivant la revendication 1 ou 2,
**caractérisé en ce que**
la vanne (51) de frein à ressort est prévue sous la forme d'une électrovanne ouverte sans courant.

4. Dispositif (1) de frein de stationnement suivant l'une des revendications précédentes,
**caractérisé en ce que**
la première unité (20a) d'électrovanne d'admission - purge est conformée de manière à prévoir au moins une première électrovanne (21a) d'admission entre le premier raccord (10a) d'air comprimé et la première ligne (41a) de commande et une première électrovanne (22a) de purge entre la première ligne (41a) de commande et une première sortie (23a) de purge.

5. Dispositif (1) de frein de stationnement suivant l'une des revendications précédentes,
**caractérisé en ce que**
la deuxième unité (1b) de frein de stationnement a au moins un deuxième raccord (10b) d'air comprimé, une deuxième unité (20b) d'électrovanne d'admission - purge, une deuxième vanne (40b) relais et au moins une autre sortie (74) d'air comprimé,
dans lequel le deuxième raccord (10b) d'air comprimé communique avec la deuxième vanne (40b) relais, dans lequel il est prévu, dans la deuxième unité (1b) de frein de stationnement, une deuxième ligne (41b) de commande, de manière à ce que la deuxième vanne (40b) relais communique avec la deuxième unité (20b) d'électrovanne d'admission - purge,
dans lequel, la deuxième ligne (41b) de commande a une deuxième dérivation (42b) en aval de la deuxième vanne (40b) relais,
dans lequel il est prévu, dans la deuxième unité (1b) de frein de stationnement, une deuxième ligne (80b) de sortie, qui communique avec la au moins une autre sortie (74) d'air comprimé et qui a une deuxième dérivation (81b) de sortie,
dans lequel il est prévu, dans la deuxième unité (1b) de frein de stationnement, une ligne (53) de réaction, qui communique avec la deuxième ligne (41b) de commande par la deuxième dérivation (42b) et avec la deuxième ligne (80b) de sortie par la deuxième dérivation (81b) de sortie,
dans lequel la deuxième unité (1b) de frein de stationnement a une deuxième unité (52b) d'étranglement, qui est montée dans la ligne (53) de réaction entre la deuxième dérivation (81b) de sortie de la deuxième ligne (80b) de sortie et la deuxième dérivation (42b) de la deuxième ligne (41a) de commande.

6. Dispositif (1) de frein de stationnement suivant la revendication 5,
**caractérisé en ce que**
la deuxième unité (20b) d'admission - purge communique avec le deuxième raccord (10b) d'air comprimé.

7. Dispositif (1) de frein de stationnement suivant la revendication 5 ou 6,
**caractérisé en ce que**
la ligne (53) de réaction constitue, en liaison avec la deuxième dérivation (42b) et la deuxième dérivation (81b) de sortie par la deuxième unité (52b) d'étranglement, une liaison de réaction entre une entrée (45b) de commande et une sortie (44b) de la deuxième vanne (40b) relais.

8. Dispositif (1) de frein de stationnement suivant l'une des revendications 5 à 7,
**caractérisé en ce que**
la deuxième unité (20b) d'électrovanne d'admission - purge est conformée avec au moins une deuxième vanne (21b) d'admission, une deuxième vanne (22b) de purge et une deuxième sortie (23b) de purge, de manière à ce que la deuxième vanne (21b) d'admission soit en communication avec la deuxième ligne (41b) de commande et de manière à ce qu'il soit prévu une deuxième vanne (22b) de purge entre la deuxième ligne (41b) de commande et une deuxième sortie (23b) de purge.

9. Dispositif (1) de frein de stationnement suivant l'une des revendications précédentes,
**caractérisé en ce que**
**en ce que** la première et la deuxième vannes (21a ; 21b) d'admission sont prévues sous la forme d'électrovannes fermées sans courant.
